# EUROPÄISCHE PATENTSCHRIFT

(11) **EP 0 339 184 B1**
(45) Veröffentlichungstag und Bekanntmachung des Hinweises auf die Patenterteilung: **24.05.1995**
(21) Anmeldenummer: 89101373.2
(22) Anmeldetag: 27.01.1989
(51) Int. Cl.: B29C 45/13, B29C 45/00, B29C 45/46

(54) **Verfahren und Vorrichtung zum Spritzgiessen von Spritzgussteilen aus plastifizierbarem Material, insbesondere aus plastifizierbaren flüssigkristall-Polymeren**
Method and apparatus for injection moulding of pieces injected from plasticizable material, in particular from plasticizable liquid crystal polymers
Procédé et dispositif pour mouler par injection des pièces injectées à partir de matière à plastifier, notamment à partir de polymères à cristaux liquides à plastifier

(30) Priorität: 31.03.1988 DE 3810954
(43) Veröffentlichungstag der Anmeldung: 02.11.1989
(73) Patentinhaber: Ferromatik Milacron Maschinenbau GmbH, D-79364 Malterdingen (DE)
(72) Erfinder: Gutjahr, Lothar, D-7831 Malterdingen (DE); Nesch, Wolfgang, D-7630 Lahr-Sulz (DE)
(74) Vertreter: Röther, Peter, Dipl.-Phys.

(56) Entgegenhaltungen:
- EP-A- 0 166 038
- EP-A- 0 188 120
- EP-A- 0 205 710
- US-A- 3 483 288
- PATENT ABSTRACTS OF JAPAN, Band 7, Nr. 265 (M-258)[1410], 25. November 1983;& JP-A-58 145 428 (RICOH) 30-08-1983

## Beschreibung

Die Erfindung betrifft ein Verfahren sowie eine Vorrichtung zum Spritzgießen von Spritzgußteilen aus plastifizierbarem Material, insbesondere aus plastifizierbaren Flüssigkristall-Polymeren, gemäß den Merkmalskombinationen der Oberbegriffe der Patentansprüche 1 und 7.

Ein solches Verfahren und die zu seiner Durchführung erforderliche Vorrichtung sind bereits aus der Druckschrift EP 0 205 710 A2 bekannt. Hier wird eine Spritzgießmaschine offenbart, bei der mindestens zwei Plastifizier- und Einspritzaggregate mittels eines auf dem Maschinengestell verfahrbaren Tisches und darauf montierter weiterer Verfahreinrichtungen jeweils paßgerecht an die Eingangsöffnung je eines Angußkanals anlegbar sind, wobei alle Angußkanäle zu einem einzigen Formnest - allerdings einem solchen mit großen Abmessungen - führen, das durch im wesentlichen gleichzeitige Betätigung aller Plastifizier- und Einspritzaggregate trotz seiner erheblichen Abmessungen kurzfristig und vollständig mit plastifiziertem Kunststoffmaterial gefüllt wird. Aufgabe dieser Vorrichtung und des damit durchgeführten Verfahrens ist es, Kunststoffartikel mit großen Abmessungen, insbesondere in zwei Dimensionen, ohne Sinkmarken und/oder entsprechende Oberflächenfehler herzustellen, wozu sowohl die Vervielfachung der Angußkanäle selbst als auch die jeweilige Verbindung zwischen Plastifizier- und Einspritzaggregat einerseits und Formnest andererseits in Form geradliniger und minimal kurzer Angußkanäle wesentliche Beiträge liefern. Ansonsten unterscheiden sich die vorbeschriebene Vorrichtung und das damit durchgeführte Verfahren allerdings nicht von dem bekannten Stand der Technik, bei dem plastifiziertes Material - abgesehen von der Angußbohrung - in ein in sich geschlossenes Formnest gespritzt wird, wobei je nach der Geometrie, den Abmessungen und der Wanddicke des Spritzgußteiles erhebliche Spritzdrücke zum Herstellen einwandfreier Spritzgußteile und auch entsprechend hohe Formzuhaltedrücke erforderlich sind, um ein Aufreißen der Spritzgießform zu verhindern.

Mit der vorgenannten Vorrichtung und dem mit ihr durchzuführenden Verfahren ist es auch nicht möglich, den Fließvorgang im Formnest derart zu beeinflussen, daß im plastifizierten Kunststoffmaterial befindliche langgestreckte polymere Makromoleküle oder Molekülketten innerhalb des entstehenden Kunststoffartikels in bevorzugter räumlicher Anordnung eine Faserstruktur ausbilden, die die Festigkeit und Belastbarkeit des erzeugten Kunststoffartikels wesentlich verbessert - so, wie es aus anderen Gebieten der Technik, zum Beispiel bei Schmiedestücken, bekannt ist, durch die entsprechende Vorgabe des Faserverlaufs eine optimale Festigkeit bzw. Belastbarkeit der Werkstücke zu erzielen.

Die wesentlichen Nachteile der vorgenannten Vorrichtung - den hohen Schließdruck und die Unbeeinflußbarkeit der möglichen Faserstruktur der erzeugten Kunststoffartikel - vermeiden die Gegenstände der Druckschriften US-PS 3 483 288 und EP 0 166 038 A1, bei denen mittels einer einzigen Quelle plastifizierten Kunststoffmaterials und zweier Angußkanäle am Formnest in diesem ein laminarer Strom von plastifiziertem Kunststoff erzeugt wird, indem der Kunststoff von der Quelle nur durch einen Angußkanal in das Formnest eintritt und aus dem anderen Angußkanal wieder herausströmt. Im Falle der erstgenannten Druckschrift erfolgt dieses Ausströmen in die Atmosphäre, im Falle der zweitgenannten Druckschrift in einen innerhalb der Spritzgießform endenden Angußkanal. In beiden Fällen ist nur ein Schließdruck erforderlich, der geringfügig über der zur Aufrechterhaltung der laminaren Strömung im Formnest erforderlichen Druckdifferenz zwischen den beiden Angußkanälen liegt; die laminare Strömung sorgt für eine eindeutige Ausrichtung der Moleküle in Strömungsrichtung und damit für die gewünschte Faserstruktur der erzeugten Kunststoffartikel. In beiden Fällen ist jedoch einerseits trotz gegenteilig behaupteter Zielsetzungen ein erheblicher Anteil an plastifiziertem Kunststoffmaterial notwendig, der durch das Formnest lediglich hindurchfließt und außerhalb des Formnestes als zu entsorgender Abfall abbindet, da die laminare Strömung möglichst lange aufrecht erhalten werden muß, um eine hinreichende Orientierung der Moleküle zu erreichen, und andererseits kann ein Schwundausgleich erst in einem sehr späten Stadium des einzelnen Spritzgießvorganges erfolgen, wenn nämlich bereits eine ausreichende Verfestigung des Kunststoffmaterials am zweiten Angußkanal vorhanden ist, und dies dann auch nur von einer Seite, nämlich vom Angußkanal für den Einlaß des Kunststoffmaterials in das Formnest her.

Eine Weiterentwicklung des letztgenannten Verfahrens und der zu seiner Durchführung erforderlichen Vorrichtung wird in der Druckschrift EP 0 188 120 A2 offenbart. Hier wird das plastifizierte Kunststoffmaterial aus einem einzigen Plastifizier- und Einspritzaggregat zunächst in einen zwischen diesem und der Spritzgießform angeordneten Verteilerblock eingespeist, der mindestens zwei von seiner Eingangsöffnung abgehende und zu je einer auf bekannte Weise betätigbaren Kolben-Zylinder-Anordnung führende Eingangskanäle und je einen von jeder Kolben-Zylinder-Anordnung zu einem Angußkanal in der Spritzgießform führenden Ausgangskanal aufweist, wobei alle Ausgangskanäle in ein- und dasselbe Formnest münden. Die Gesamtvorrichtung arbeitet so, daß zunächst eine Kolben-Zylinder-Anordnung einen Durchgang vom Plastifizier- und Einspritzaggregat über ihren zugehörigen Angußkanal in das Formnest und von diesem in den durch die andere Kolben-Zylinder-Anordnung gegen das Plastifizier- und Einspritzaggregat abgesperrten weiteren Angußkanal freigibt, so daß der gesamte vorgenannte Raum von dem Plastifizier- und Einspritzaggregat vollständig mit plastifiziertem Kunststoffmaterial gefüllt werden kann. Dann werden die Kolben-Zylinder-Anordnungen derart gegenphasig betätigt, daß die gesamte zwischen den beiden Kolben befindliche Menge des Kunststoffmaterials - d. h. auch diejenige im Formnest - unter mehrfachem Richtungswechsel im vorgenannten Raum hin- und hergeschoben wird, wobei eine deutliche Ausrichtung der Moleküle in der Schwingungsrichtung auftritt. Bei dieser gegenphasigen Kolbenbewegung wird bereits ein Teil des möglichen Materialschwundes kompensiert; für eine endgültige Kompensation auftretenden Materialschwundes werden die Kolben-Zylinder-Anordnungen abschließend auf gleichphasigen Betrieb umgeschaltet.

Die Ursache der vorgenannten - gewollten - Ausrichtung der Moleküle sind die bei der hin- und hergehenden Schwingungsbewegung des Kunststoffmaterials in diesem - d. h. zwischen den in ihm enthaltenen Molekülen - auftretenden Scherkräfte, die dann allerdings auch zu einer merklichen Erwärmung des Kunststoffmaterials innerhalb der Vorrichtung führen, die ihrerseits für das Abbinden des zu erzeugenden Kunststoffartikels von der Spritzgießform wieder abgeführt werden muß. Dies verzögert das Abbinden der erzeugten Kunststoffartikel ganz erheblich, wofür in der in Rede stehenden Druckschrift Zeiten in der Größenordnung von 400 s angegeben werden, die für die wirtschaftliche Auswertung des offenbarten Verfahrens nur in Ausnahmefällen akzeptabel sein können. Abgesehen davon, daß der Verteilerblock einen zusätzlichen apparativen Aufwand erfordert, der zum einen in der Notwendigkeit zweier zusätzlicher Kolben-Zylinder-Anordnungen mit einer aufwendigen Steuerung und zum anderen in der Notwendigkeit einer ständigen Beheizung begründet ist, die dafür sorgen muß, daß das plastifizierte Kunststoffmaterial auf den nunmehr wesentlich längeren Wegen vom Plastifizier- und Einspritzaggregat zum Formnest nicht vorzeitig abbindet.

Der vorliegenden Erfindung liegt daher die Aufgabe zugrunde, ein Verfahren und eine zu seiner Durchführung geeignete Vorrichtung zur Verfügung zu stellen, mit deren Hilfe bei möglichst geringem apparativen Aufwand und bei möglichst geringem Schließdruck der zu verwendenden Spritzgießform Kunststoffartikel hergestellt werden können, die bei minimalem Zeitaufwand für das Abbinden eine molekulare Faserstruktur in vorgegebener Ausrichtung und mit vorgegebenen physikalischen Eigenschaften aufweisen.

Diese Aufgabe löst die vorliegende Erfindung mit Hilfe der jeweiligen Merkmalskombination der Patentansprüche 1 und 7.

Dabei erweist es sich als ganz besonders vorteilhaft, daß zum vollständigen Füllen des Formnestes der geschlossenen Spritzgießform in mehrfach wiederholtem Wechsel zwischen den Plastifizier- und Einspritzaggregaten bzw. ihren zugehörigen Angußbohrungen von jeweils einem Plastifizier- und Einspritzaggregat durch seine zugehörige Angußbohrung nur eine Teilmenge des insgesamt erforderlichen Materials für die vollständige Füllung des Formnestes in dieses eingespritzt wird, während das gleichzeitig bereits im Formnest befindliche Material zumindest teilweise durch mindestens eine weitere Angußbohrung in Richtung auf das dazu gehörige Plastifizier- und Einspritzaggregat aus dem Formnest herausströmen kann, weil damit überraschenderweise bereits vor der vollständigen Füllung des Formnestes eine hinreichende Ausrichtung der Moleküle in Richtung der lediglich von Teilmengen der Formnestfüllung durchgeführten Schwingungen erzielt wird, wobei sich die auftretenden Scherkräfte und damit die mit ihnen verbundene Wärmeentwicklung nur langsam aufbauen und die zusätzlich auftretende Wärme andererseits früher und schneller wieder abgeführt werden kann, so daß das Abbinden des zu erzeugenden Kunststoffartikels wesentlich schneller vor sich geht als bei dem vorstehend beschriebenen Stand der Technik.

Als vorteilhaft erweist sich auch, daß zwischen den vorgenannten Angußbohrungen nur eine Druckdifferenz erzeugt werden muß, die zur Aufrechterhaltung der pendelnden Strömung im Formnest ausreicht, wobei diese Druckdifferenz deutlich niedriger ist als die beim üblichen Spritzgießen erforderlichen Schließdrücke für die Spritzgießform, so daß im vorliegenden Fall auch der anzuwendende Schließdruck wesentlich reduziert werden kann.

Ein weiterer wesentlicher Vorteil besteht darin, daß sich außer langen Molekülen bzw. Molekülketten auch Glasfasern, Kohlefasern usw. in Strömungsrichtung orientieren und dadurch die Festigkeit erheblich heraufsetzen.

Bei einer vorteilhaften Ausgestaltung der Erfindung wird das plastifizierte Material auch nach dem vollständigen Füllen des Formnestes durch die beiden Plastifizier- und Einspritzaggregate hin und her geschoben, wobei in einer noch weitergehenden Ausformung der Erfindung das Hin- und Herschieben des plastifizierten Materials in Abhängigkeit von der Abkühlgeschwindigkeit der Spritzgußteile erfolgt.

Durch diese Maßnahme wird erreicht, daß aufgrund des sich abkühlenden Spritzgußteils, dessen Abkühlung von der Forminnenwandung her in Richtung zum Inneren des Spritzgußteils erfolgt und dabei Scherzonen, in denen die Orientierung der Moleküle bzw. Molekülketten erfolgt, ins Innere des Spritzgußteils ausbildet, im Idealfall eine Orientierung der Moleküle und ein gezielter Verlauf der Fasern über den gesamten Querschnitt erreicht wird.

Bei einer weiteren vorteilhaften Ausgestaltung der Erfindung werden die Intervalle für das Hin- und Herschieben des plastifizierten Materials durch Pausen voneinander getrennt.

Durch diese Maßnahme wird erreicht, daß die Geschwindigkeit des hin- und herströmenden Materials in weiten Grenzen aufgrund der Massenträgheit des strömenden Materials im Hinblick auf eine überraschend optimale Orientierung der Moleküle bzw. Molekülketten steuerbar ist.

Bei einer weiteren Ausführungsform der Erfindung erweist es sich als vorteilhaft, dem Formnest über mindestens ein weiteres Paar von Angußbohrungen abwechselnd zum ersten Paar der Angußbohrungen plastifiziertes Material zur Änderung der Strömungsrichtung zuzuführen, so daß durch diese Maßnahmen das Spritzgußteil in zwei Schichten gespritzt wird.

Durch die entsprechende Anordnung und Ausrichtung des zweiten Paares der Angußbohrungen ist es hierbei möglich, den Faserverlauf bzw. Spannungsverlauf der zweiten Schicht so vorzugeben, daß sie zur Faserrichtung bzw. Spannungsrichtung der ersten Schicht um 90° versetzt wird.

Durch diese Maßnahmen ist es im Prinzip möglich, durch eine entsprechende Anordnung von weiteren Paaren von Angußbohrungen nach dem Prinzip der Vielschichtplatte Spritzgußteile aus mehreren Schichten zu Spritzen, wobei der Faserverlauf der aufeinanderfolgenden Schichten jeweils zueinander versetzt ist. Prinzipiell ist es möglich, in aufeinanderfolgenden Ebenen die Angußbohrungen paarweise und abwechselnd in verschiedenen Richtungen zu orientieren und dann in aufeinanderfolgenden Schichten das Spritzgußteil zu spritzen.

Bei einer anderen Ausgestaltung der Erfindung ist es von Vorteil, während des Strömens des plastifizierten Materials in Richtung zu dem einen oder anderen Plastifizier- und Einspritzaggregat das Formnest zu entlüften.

Durch diese Maßnahmen wird erreicht, daß das in das Formnest einströmende plastifizierte und in Richtung zum anderen Plastifizier- und Einspritzaggregat weiter strömende plastifizierte Material die in dem Formnest befindliche Luft vor sich herschiebt und auf ihrem Strömungswege an einer geeigneten Stelle über ein Ventil an die Umgebung abgibt.

Bezüglich der Vorrichtung ist es auch von erheblichem Vorteil, daß die Plastifizier- und Einspritzaggregate wechselweise auf Injektion bzw. Druckentlastung schaltbar sind, wobei das auf Injektion geschaltete Plastifizier- und Einspritzaggregat während des Füllvorganges des Formnestes auf eine der beiden Angußbohrungen arbeitet und das aus der anderen Angußbohrung austretende Material in Richtung auf das andere Plastifizier- und Einspritzaggregat geführt wird, dessen Schnecke auf Druckentlastung geschaltet ist, und wobei nach dem Füllen des Formnestes und der hinreichenden Ausrichtung der Kunststoffschmelze beide Plastifizier- und Einspritzaggregate zwecks Nachfüllens bzw. Nachdrückens auf Injektion geschaltet werden, weil damit für die Konstruktion der Vorrichtung weitgehend Maschinenelemente bekannter Art verwendet werden können, wobei unter Beibehaltung der kurzen Wege von den Plastifizier- und Einspritzaggregaten zu den Angußkanälen und damit auch zum Formnest eine große Flexibilität zur Anordnung der Angußkanäle im Verhältnis zum Formnest ermöglicht wird, was andererseits eine große Flexibilität bei der Vorgabe der Ausrichtung der gewünschten Faserstruktur der erzeugten Kunststoffartikel bedeutet.

Prinzipiell ist es möglich, die beiden Angußbohrungen einer geschlossenen Spritzgießform diametral einander gegenüberliegend anzuordnen, so daß das Formnest gewissermaßen während des Strömens des plastifizierten Materials die Funktion einer Angußbohrung hat.

Diese Anordnung ist vor allem vorteilhaft bei Spritzgußteilen mit Zylinder- bzw. Rotationssymmetrie.

Generell kann die Anordnung der Angußbohrungen beliebig zueinander erfolgen, und zwar unter Berücksichtigung der Geometrie des Formnestes, damit der entsprechend vorgegebene Faser- bzw. Spannungsverlauf im Spritzgußteil erzielt wird.

So ist es zum Beispiel vorteilhaft beim Spritzen von L-förmigen Profilen, die Achsen der Angußbohrung sich unter einem Winkel von 90° schneiden zu lassen, so daß sich beim Spritzgießen der L-förmigen Profile ein L-förmiger Verlauf der Fasern einstellt.

Im Prinzip kommen im einfachsten Fall mindestens zwei Plastifizier- und Einspritzaggregate und eine Spritzgießform mit mindestens zwei Angußbohrungen zum Einsatz, wobei zum Spritzen der Spritzgußteile das Formnest der Spritzgießform über die Angußbohrungen mit den Plastifizier- und Einspritzaggregaten in kommunizierender Verbindung steht.

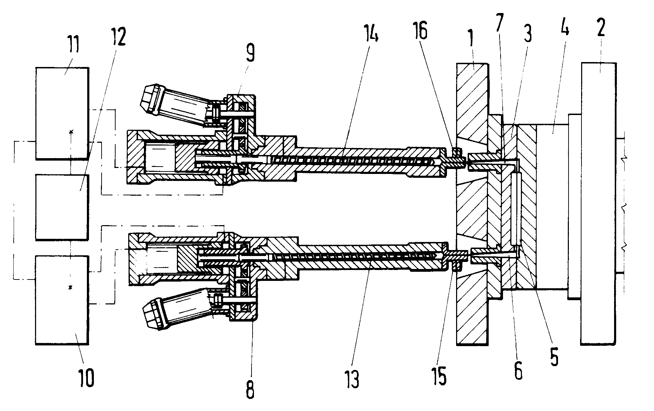

Die Erfindung ist in der Zeichnung anhand eines Ausführungsbeispiels erläutert.

Mit 1 bzw. 2 sind die feststehende und die auf nicht dargestellten Holmen verschiebbare Formaufspannplatte bezeichnet, auf deren zueinander zeigenden Seiten die Formhälften 3 und 4 aufgespannt sind.

Die beiden Formhälften begrenzen in Schließstellung der Spritzgießform das Formnest.

Die auf der feststehenden Formaufspannplatte 1 aufgespannte Formhälfte 3 weist die beiden Angußbohrungen 6 und 7 auf, gegen die die Plastifizier- und Einspritzaggregate 8 bzw. 9 anstehen.

Mit 10 und 11 sind schematisch die hydraulischen und an sich bekannten Steuereinrichtungen und mit 12 das elektrische Steuerteil der Plastifizier- und Einspritzaggregate bezeichnet, deren Plastifizier- und Einspritzschnecke mit 13 bzw. 14 bezeichnet ist.

Mit 15 bzw. 16 sind die Entlüftungsventile für die aus dem Formnest und den Angußbohrungen zu verdrängende Luft bezeichnet.

Während des Betriebs der Vorrichtung befindet sich vor der Spitze der beiden Plastifizier- und Einspritzschnecken plastifiziertes Material, das während des Füllens des Formnestes und des Verschiebens des einen plastifizierten Materials einen zusammenhängenden Massestrom bildet und aufgrund der vorgegebenen hydraulischen Drücke in den Spritzzylindern unter einem vorgegebenen Differenzdruck steht und mit entsprechender Geschwindigkeit in beiden Richtungen durch die Angußbohrungen und das Formnest strömt.

Nach Füllen des Formnestes und Unterbrechen des weiteren Materialtransportes wird gegebenenfalls mit beiden Plastifizier- und Einspritzaggregaten ein entsprechend hoher Druck auf das abkühlende Spritzgußteil zur Kompensation des Schwundes ausgeübt.

## Patentansprüche

1. Verfahren zum Spritzgießen von Spritzgußteilen aus plastifizierbarem Material, insbesondere aus plastifizierbaren Flüssigkristall-Polymeren, wobei das plastifizierte Material in eine geschlossene Spritzgießform (3,4) mit mindestens zwei Angußbohrungen (6,7) mit jeweils einem zugeordneten Plastifizier- und Einspritzaggregat (8,9) eingespritzt und gegebenenfalls ein auftretender Schwund der sich abkühlenden Spritzgußteile durch weitere Materialzufuhr kompensiert wird, dadurch gekennzeichnet,
daß zum vollständigen Füllen des Formnestes (5) der geschlossenen Spritzgießform (3,4) in mehrfach wiederholtem Wechsel zwischen den Plastifizier- und Einspritzaggregaten (8,9) bzw. ihren zugehörigen Angußbohrungen (6,7) von jeweils einem Plastifizier- und Einspritzaggregat (8,9) durch seine zugehörige Angußbohrung (6,7) nur eine Teilmenge des insgesamt erforderlichen Materials für die vollständige Füllung des Formnestes (5) in dieses eingespritzt wird, während das gleichzeitig bereits im Formnest (5) befindliche Material zumindest teilweise durch mindestens eine weitere Angußbohrung (7,6) in Richtung auf deren zugehöriges Plastifizier- und Einspritzaggregat (9,8) aus dem Formnest herausströmen kann.

2. Verfahren nach Anspruch 1,
dadurch gekennzeichnet,
daß nach dem Füllen des Formnestes (5) durch die beiden Plastifizier- und Einspritzaggregate (8,9) das plastifizierte Material mittels der Plastifizier- und Einspritzaggregate (8,9) im Formnest (5) hin- und hergeschoben wird.

3. Verfahren nach Anspruch 2,
dadurch gekennzeichnet,
daß das plastifizierte Material in Abhängigkeit von der Abkühlgeschwindigkeit der Spritzgußteile hin- und hergeschoben wird.

4. Verfahren nach Anspruch 2 oder 3,
dadurch gekennzeichnet,
daß die Intervalle für das Hin- und Herschieben des plastifizierten Materials durch Pausen voneinander getrennt werden.

5. Verfahren nach einem der Ansprüche 1 bis 4,
dadurch gekennzeichnet,
daß über mindestens ein weiteres Paar von Angußbohrungen abwechselnd zum ersten Paar der Angußbohrungen (6,7) plastifiziertes Material zur Änderung der Strömungsrichtung im Formnest (5) zugeführt wird.

6. Verfahren nach einem der Ansprüche 1 bis 5,
dadurch gekennzeichnet,
daß während des Strömens des plastifizierten Materials in Richtung zu dem einen oder anderen Plastifizier- und Einspritzaggregat (8,9) das Formnest (5) entlüftet wird.

7. Vorrichtung zur Durchführung des Verfahrens nach einem der Ansprüche 1 bis 6 mit einer Spritzgießmaschine, die mindestens zwei Plastifizier- und Einspritzaggregate (8,9) und eine Spritzgießform (3,4) mit mindestens zwei Angußbohrungen (6,7) aufweist, wobei das in der geschlossenen Spritzgießform (3,4) ausgebildete Formnest (5) zumindest während des Spritzvorganges über die Angußbohrungen (6,7) in kommunizierender Verbindung mit den Plastifizier- und Einspritzaggregaten (8,9) steht,
dadurch gekennzeichnet,
daß die Plastifizier- und Einspritzaggregate (8,9) wechselweise auf Injektion bzw. Druckentlastung schaltbar sind, wobei das auf Injektion geschaltete Plastifizier- und Einspritzaggregat (8,9) während des Füllvorganges des Formnestes (5) auf eine der beiden Angußbohrungen (6,7) arbeitet und das aus der anderen Angußbohrung (7,6) austretende Material in Richtung auf das andere Plastifizier- und Einspritzaggregat (9,8) geführt wird, dessen Schnecke auf Druckentlastung geschaltet ist, und wobei nach dem Füllen des Formnestes (5) und der hinreichenden Ausrichtung der Kunststoffschmelze beide Plastifizier- und Einspritzaggregate (8,9) zwecks Nachfüllens bzw. Nachdrückens auf Injektion geschaltet werden.

## Claims

1. Process for injection moulding of injection moulded articles from plastifiable material, more specifically plastifiable liquid crystalline polymers, the plastified material being injected into a closed injection mould (3, 4) which has at least two feed channels (6, 7), each feed channel being connected with a plastifying and injection unit (8, 9), and shrinkage of the moulded article possibly occurring on cooling being compensated by additional supply of material,
characterised in
that for complete filling Of the cavity (5) of the closed injection mould (3, 4), in a repeated alternation of the plastifying and injection units (8, 9) and their respective feed channels (6, 7), only part of the total amount of material actually required for completely filling the cavity (5) is injected into it through one of the plastifying and injection units (8, 9) and its feed channel (6, 7) while at the same time at least part of the material which already is in the cavity (5) is allowed to flow from it through at least one more feed channel (7, 6) in the direction of its plastifying and injection unit (9, 8).

2. Process according to claim 1,
characterised in
that after filling of the cavity (5) through the two plastifying and injection units (8, 9) the plastified material is caused to move back and forth inside the cavity (5) by the plastifying and injection units (8, 9).

3. Process according to claim 2,
characterised in
that the plastified material is caused to move back and forth in the cavity (5) depending upon the cooling rate of the article moulded.

4. Process according to claim 2 or 3,
characterised in
that the intervals at which the plastified material is caused to move back and forth are separated from one another by periods of rest.

5. Process according to claims 1 to 4,
characterised in that
through at least one more pair of feed channels, located on a parallel level to that of the first pair of feed channels (6, 7), plastified material is fed into the cavity (5) at a different flow direction.

6. Process according to one of the claims 1 to 5,
characterised in
that the cavity (5) is deaerated while the plastified material flows in the direction of the one or the other plastifying and injection unit (8, 9).

7. Apparatus for the execution of the process according to one of the claims 1 to 6 with an injection moulding machine equipped with at least two plastifying and injection units (8, 9) and an injection mould (3, 4) with at least two feed channels (6, 7), the cavity (5) formed inside the closed injection mould (3, 4) communicating at least during the injection process via the feed channels (6, 7) with the plastifying and injection units (8, 9),
characterised in
that the plastifying and injection units (8, 9) are changeable by turns from injection to pressure relief, the plastifying and injection unit (8, 9) in the injection phase communicating with one of the two feed channels (6, 7) during the process of filling the cavity (5), and the material flowing from the other feed channel (7, 6) being conveyed in the direction of the other plastifying and injection unit (9, 8) the screw of which is in the pressure relief phase, and that after filling of the cavity (5) and sufficient orientation of the plastic melt, the two plastifying and injection units (8, 9) are changeable to "injection" for the purpose of refilling and pressure holding, respectively.

## Revendications

1. Procédé pour le coulage par injection de pièces moulées par injection à partir de matières plastifiables, et tout particulièrement polymères à propriétés de cristaux liquides plastifiables, la matière plastifiée étant injectée dans un moule à injection fermé (3, 4) disposant d'au moins deux canaux de carotte (6, 7), dont chacun est en communication avec un groupe de plastification et d'injection (8, 9), le rétrécissement éventuel de la pièce moulée, intervenant au cours du refroidissement de celle-ci, étant le cas échéant compensé par alimentation supplémentaire de matière plastifiée,
caractérisé en ce que
pour le remplissage total du creux (5) du moule à injection fermé (3, 4), un des groupes de plastification et d'injection (8, 9), par son canal de carotte (6, 7), n'injecte qu'une partie de la quantité totale nécessaire au remplissage complet du creux (5), les deux groupes de plastification et d'injection (8, 9) fonctionnant tour à tour en plusieurs opérations d'alternance successives, alors que simultanément au moins une partie de la matière plastifiée qui se trouve déjà dans le creux (5) du moule peut en sortir par au moins un autre canal de carotte (7, 6), pour couler vers le groupe de plastification et d'injection (9, 8) avec lequel le canal de carotte concerné est en communication.

2. Procédé suivant la revendication 1,
caractérisé en ce que
après le remplissage du creux (5) du moule à injection par les deux groupes de plastification et d'injection (8, 9), la matière plastifiée est remuée en un mouvement de va-et-vient à l'aide des dits groupes de plastification et d'injection (8, 9).

3. Procédé suivant la revendication 2,
caractérisé en ce que
la matière plastifiée est remuée en un mouvement de va-et-vient en fonction de la vitesse de refroidissement de la pièce moulée.

4. Procédé suivant la revendication 2 ou 3,
caractérisé en ce que
des phases de repos sont intercalées entre les intervalles de remuement de la matière plastifiée.

5. Procédé suivant une des revendications 1 à 5,
caractérisé en ce que
par au moins une paire additionnelle de canaux de carotte, disposés à un niveau parallèle à celui de la première paire de canaux de carotte (6, 7), la matière plastifiée est alimentée au creux (5) du moule à injection à un sens d'écoulement différent de celui de la première paire de canaux de carotte (6, 7).

6. Procédé suivant une des revendications 1 à 5,
caractérisé en ce que
le creux (5) du moule à injection est ventilé pendant que la matière plastifiée s'écoule dans la direction de l'un ou de l'autre groupe de plastification et d'injection (8, 9).

7. Dispositif pour la réalisation du procédé suivant une des revendications 1 à 6 par une machine de moulage par injection, dotée d'au moins deux groupes de plastification et d'injection (8, 9) et d'un moule à injection (3, 4) avec au moins deux canaux de carotte (6, 7), le creux (5) du moule à injection fermé (3, 4) étant en communication, au moins pendant l'opération d'injection par les canaux de carotte (6, 7), avec les groupes de plastification et d'injection (8, 9),
caractérisé en ce que
les groupes de plastification et d'injection (8, 9) peuvent être opérés tour à tour en position "injection" et "détente", le groupe de plastification et d'injection (8, 9) qui se trouve en position "détente" étant en communication avec un des canaux de carotte (6, 7) pendant l'opération de remplissage du creux (5) du moule à injection, alors que la matière plastifiée sortant de l'autre canal de carotte (7, 6) est conduite dans la direction de l'autre groupe de plastification et d'injection (9, 8), dont la vis sans fin se trouve en état de détente, et que, après le remplissage du creux (5) du moule à injection (3, 4) et au moment où une orientation suffisante de la fonte de matière plastique s'est établie, les groupes de plastification et d'injection (8, 9) sont tous les deux mis en position "injection" pour des fins de recharge et de remplissage complémentaire, respectivement.
